# FASCICULE DE BREVET EUROPEEN

(11) **EP 0 478 488 B1**
(45) Date de publication et mention de la délivrance du brevet: **26.01.1994**
(21) Numéro de dépôt: 91500078.0
(22) Date de dépôt: 19.07.1991
(51) Int. Cl.: A22C 7/00

(54) **Machine à fabriquer des hamburgers, perfectionnée**
Maschine zum Herstellen von Hamburgern
Machine for making hamburgers

(30) Priorité: 27.07.1990 ES 9002030
(43) Date de publication de la demande: 01.04.1992
(73) Titulaire: INDUSTRIAS GASER, S.L., E-17190 Salt (Girona) (ES)
(72) Inventeur: Garganta Riubrugent, Narcis, E-17190 Salt (Girona) (ES)
(74) Mandataire: Manresa Val, Manuel

(56) Documents cités:
- EP-A- 252 865
- ES-A- 556 404
- ES-A- 8 700 979
- FR-A- 2 609 599
- GB-A- 2 030 444
- US-A- 2 795 816
- US-A- 2 948 016
- US-A- 2 971 133

## Description

La présente invention concerne une machine perfectionnée pour faire des hamburgers. En l'appliquant on obtient des avantages importants dans le domaine constructif, fonctionnel et pratique par rapport à celles qui sont connues à ce jour.

En fait, il existe plusieurs machines destinées à couper de la viande hachée ou à fabriquer des hamburgers qui comportent généralement un banc et une carcasse à l'intérieur de laquelle est logé un mécanisme d'électro-aimant, à la partie du haut de la machine il se trouve un entonnoir ou conduite d'entrée branchable à une machine à bourrer ou à hacher chargée de fournir la viande. Ladite machine dispose de deux rouleaux de papier, un pour le côté inférieur de la viande et un autre pour le côté supérieur de celle-ci. La viande hachée reste enfermée entre lesdits papiers et lorsqu'elle passe par une lame transversale actionnée par cet électro-aimant, elle est coupée en pièces rectangulaires.

On connait également le Brevet d'Invention ES-A-489.258 qui comprend un réservoir pour contenir la viande hachée, agencé avec une ouverture inférieure d'alimentation de la viande sous forme de bande à une rampe, elle comprend également la fourniture de deux bandes en papier qui accompagnent au-dessus et au-dessous cette masse de viande jusqu'à une lame-moule à couper, façonner et presser ladite bande de viande, ladite lame ayant des mouvements alternatifs de montée et de descente grâce à un piston ou moteur et il y a des moyens d'aspiration des découpures de papier restantes.

Par ailleurs, le Brevet d'Invention ES-A-556.404, correspondant à EP-A-252865, décrit un dispositif automatique pour élaborer des hamburgers selon le préambule de la revendication 1 qui, en bref, est composé d'un châssis articulé au moyen d'un pivot à un banc, fixé à l'aide d'une tige étranglée par une commande vissée et muni: d'une bouche d'alimentation de viande hachée; un système de réglage du volume de viande formé par une vis solidaire d'une plaque interne; un système de transport formé par des bandes en polyéthylène qui développent deux bobines; et une rampe de descente. Le Certificat d'Addition n. ES-A-8700979, correspondant à EP-A-252865, vient améliorer le brevet précédent dans le sens qu'il ajoute à la machine une première cellule d'ordre qui branche l'organe actionnant cette machine une fois que l'hamburger façonné auparavant est expulsé, ainsi qu'une deuxième cellule de contrôle qui arrête la machine lorsque le cordon de viande à façonner est fini.

La machine qui fabrique les hamburgers, objet du présent brevet d'invention, comporte une série de dispositifs et de détails qui améliorent son efficacité, productivité et sûreté, tels que: inclure une cellule qui, combinée avec des marques imprimées auparavant sur le papier qui va envelopper les hamburgers, détecte le passage de la bande dudit papier en commandant l'actionnement du poinçon qui les façonne; l'expulsion des découpures restantes de papier en les poussant avec de l'air; un dispositif antiobstruction; un dispositif qui détecte quand le papier des rouleaux est fini; un organe de frein d'inertie pour, au moins, un desdits rouleaux; et la possibilité de commande de la propre machine en même temps que celle de la machine délivrant la viande hachée soit de façon continue soit à des intervalles. Afin de faciliter l'explication, il est annexé à la présente description des pages de dessins dans lesquelles il a été représenté un cas pratique de réalisation qui est cité simplement au titre d'exemple non limitatif de la portée du présent brevet d'invention.

Dans lesdits dessins:

La fig. 1 illustre une vue générale en perspective de la machine selon les perfectionnements actuels.

Les figures 2 et 3 correspondent à des détails élargis des zones II et III indiquées dans la fig. 1.

Et les figures 4 et 5 sont une vue en coupe et une autre en plan d'une variante du poinçon.

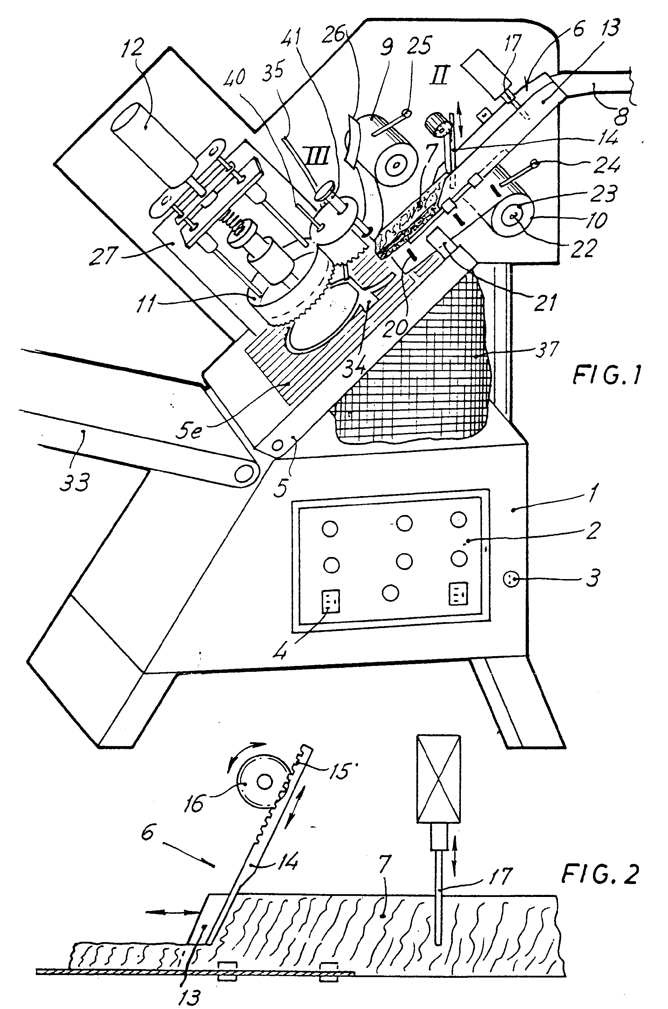

D'après ces figures 1, 2 et 3, la machine qui produit des hamburgers perfectionnée objet de la présente invention, comporte une base en manière d'armoire -1- dans laquelle est contenu le système électrique; à l'extérieur il y a le tableau de commande -2- ainsi que des prises de courant - 3 - 4 -.

Au-dessus de cette base -1- il y a une plate-forme inclinée -5- dans laquelle sont montés pratiquement tous les dispositifs de la machine: le mécanisme automatique d'entrée réglable -6- de viande hachée ou de masse -7- branchée à la sortie d'une machine à bourrer ou à un réservoir de masse -8-; les deux bobines -9-10- fournissant le film flexible et transparente, tel que du cellophane ; le dispositif de coupe et de façonnage -11-; et l'organe -12- d'actionnement dudit dispositif -11-.

Le mécanisme d'entrée de viande hachée -6- porte des guides latéraux coulissants -13- qui agissent comme frein de la masse -7- pour pouvoir travailler avec n'importe quelle sorte de viande. De plus, il porte une espèce de planche inclinée -14- dont l'extémité supérieure est dentelé à la manière d'une glissière -15- dans laquelle est engrenée une roue -16-; selon si ladite roue -16- pivote dans un sens ou un autre cette planche -14- monte ou descend en étranglant plus ou moins le passage de l'alimentateur ou mécanisme -6- d'entrée de la viande, et en réglant donc la grosseur ou le poids de la masse qui entre -7-.

Ledit alimenteur compte aussi sur une fermeture de vanne -17- qui peut éventuellement couper l'alimentation tandis que le dispositif coupeur façonneur -11- travaille.

Les bobines -9-10- fournissent la bande de cellophane respective -18-19- sur le côté supérieur et sur le côté inférieur de la masse de viande hachée -7-. Une desdites bandes, l'inférieure -19- par exemple, porte une série de marques -20- ayant la même distance entre elles que la longueur d'un hamburger, afin que lorsque ladite marque -20- passe en face de la cellule inférieure -21- celle-ci la détecte et commande le fonctionnement du dispositif coupeur façonneur -11-.

Les mêmes bobines sont piquées sur un pivot fixe -22- et ont un noyau métallique -23- qui, lorsque le cellophane est fini, reçoit le contact direct d'un palpeur -24-25- respectif qui commande l'arrêt de la machine. Sur lesdites bobines -9-10- un frein d'inertie conventionnel -26- agit également qui évite que plus de papier ou de cellophane qu'il ne faut ne soit déroulé.

Près de la plate-forme -5- il y a le châssis -27- portant le dispositif coupeur façonneur -11- des hamburgers et autres éléments assimilés. Ce dispositif coupeur façonneur -11- consiste basiquement en un poinçon -28- à bord dentelé et coupant actionné par le cylindre -12- et dont le contour a la forme du hamburger plus une précoupe -28a- pour la portion suivante de viande avec cellophane. Le même dispositif -11- peut être démonté dudit châssis -27- afin de pouvoir le nettoyer facilement et aussi pour pouvoir le remplacer par un autre qui produise des hamburgeers ayant une forme différente.

Dans le poinçon -28- il y a le fouloir de l'hamburger -29- qui se cache à l'intérieur de celui-là lorsqu'il descend jusqu'à la butée et fait le façonnage de l'hamburger. Ce fouloir -29- est accroché à un ressort -30- qui fait que lorsque le poinçon -28- monte l'hamburger -31- va vers le haut avec lui; en arrivant à la fin de la montée les expulseurs -32- agissent qui, comme ils sont fixes, dépassent et décollent l'hamburger -31- déjà prêt avec les deux papiers incorporés, elle tombe sur la rampe de la plate-forme qui porte une zone striée -5e- pour que cet hamburger -31- ne se colle pas et pour qu'il aille à une bande transporteuse -33-.

Sous ledit poinçon -28-, à la base -5e-, il y a des ouvertures -34- dans lesquelles passe un courant d'air provenant de la conduite ou buse -35- en faisant que les découpures de papier restantes passent à travers ces ouvertures -34- et aillent à un réservoir inférieur -37- qui pourra être un sac en maille.

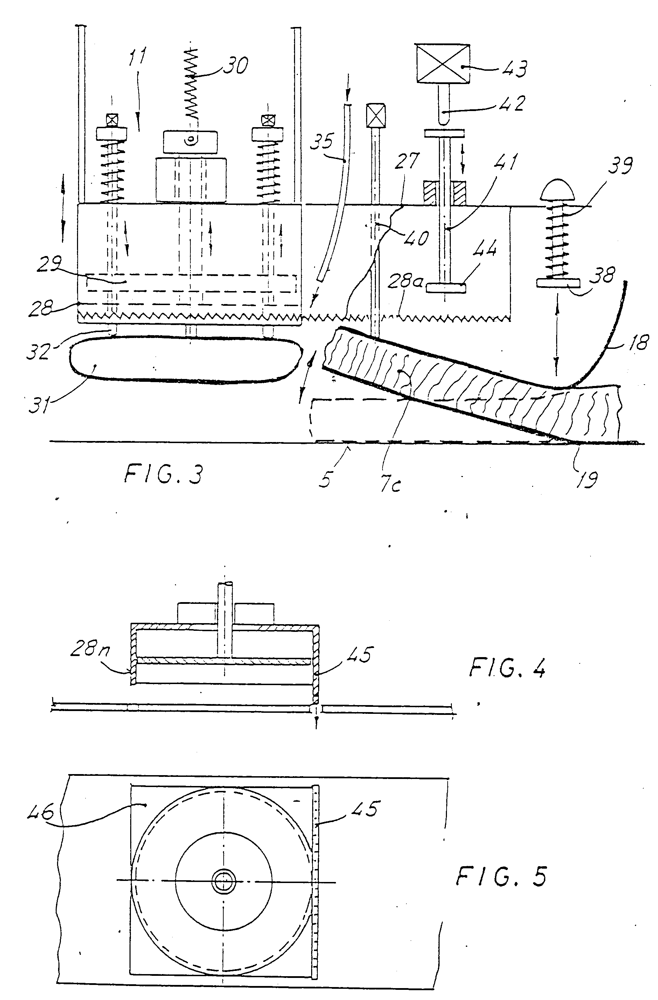

La marque respective -20- qui a servi pour activer la cellule -21- s'en ira avec lesdites découpures restantes -36-. Alternativement (fig. 4 et 5) le poinçon -28n- disposera d'une partie transversale droite et dentelée -45- pour couper le cellophane, adossée à une autre partie ronde, ovale, etc. pour le pressage et sans précoupe. Dans ce cas ledit poinçon -28n- agira sur une ouverture carrée ou rectangulaire -46-.

En retournant dans le cours de la viande hachée, il existe un petit fouloir -38- à ressort -39- monté sur le même châssis -5- du poinçon -28- qui descend en même temps que ce dernier et se pose sur la bande supérieure de cellophane -18- pour que celle-ci s'adosse sur la viande hachée -7c-. Par ailleurs, il existe une tige verticale fixe -40- contre laquelle bute la masse de viande avec cellophane lorsqu'elle -7c- monte en même temps que le poinçon -28- lorsqu'on finit de couper un hamburger -31- de sorte que lorsqu'elle bute cette masse -7c- se sépare du poinçon -28- et descend en s'adossant à la plate-forme -5-.

Il existe également une tige -41- indépendente de la montée et la descente du châssis -27- du poinçon -28- dont l'extrémité supérieure est près du bouton -42- d'un microrupteur -43- tandis que son extrémité inférieure porte un prolongement -44- en face du passage de la viande hachée avec cellophane -7c-, de sorte que dans le cas où il se produirait une accumulation de celle-ci cela provoquerait la montée de cette tige -41- qui appuierait sur le microrupteur -43- qui arrêterait la machine et éviterait les obstructions.

Tous les mécanismes décrits sont dans une protection (non représentée) qui, lorsqu'elle est ouverte, et représente un danger pour l'ouvrier, arrête automatiquement la machine.

Par ailleurs, toutes les pièces qui peuvent se salir sont démontables pour pouvoir les nettoyer au dehors de la machine.

La machine, selon l'invention, permet de fabriquer des hamburgers de toute forme avec du cellophane ou du papier transparent sur les deux côtés si on le souhaite, à des vitesses de fabrication franchement élevées, avec un poids de chaque hamburger très exact et le papier imprimé de sorte que l'impression ou le nom, dessin etc. sont toujours centrés sur les hamburgers. De plus, elle permet de brancher la source d'alimentation à la propre machine et de commander tout le système depuis une seule commande. Dans ce cas, il existe un système basé sur un dispositif automatique temporisateur ou relais conventionnels, non représentés, pour alimenter la machine en portions, qui consiste à faire fonctionner la bourreuse -8- à des intervalles marqués par ledit dispositif automatique. Toutes les parties électriques sont protégées de sorte que l'humidité n'affecte aucun composant.

## Revendications

1. Machine à fabriquer des hamburgers perfectionnée du type qui basiquement comporte un banc avec une plate-forme inclinée (5), à la partie supérieure de laquelle il y a des moyens de délivrance de viande hachée provenant d'une machine à bourrer, un réservoir ou organe de délivrance (8) sous pression de celle-ci, une conduite d'entrée de viande hachée munie de moyens pour en régler le passage, puis il y a des moyens tels que bobines (9,10) qui fournissent des bandes (18,19) de film flexible pour couvrir respectivement, au-dessus et au-dessous, la masse de viande hachée (7) qui avance depuis ces moyens de délivrance, y après un moyen de façonnage (11) de la viande hachée en hamburger, tel qu'un poinçon presseur (28,29), actionné par un organe (12) mécanique ou pneumatique, caractérisée en ce que: ledit banc consiste en une espèce d'armoire (1) qui contient le circuit électrique et les commandes de fonctionnement et de maniement de la propre machine; la conduite d'entrée de viande hachée est munie de moyens pour couper à intervalles l'alimentation; les bobines (9,10) de bande flexible sont munies de freins d'inertie respectifs, ainsi que d'éléments respectifs qui détectent lorsque le film est fini; à la sortie desdites bobines il y a un fouloir (38) à ressort (39), les bandes (18,19) de film flexible et de la viande hachée (7); au moins une des bandes (18,19) de film flexible contient des marques (20), à une certaine distance les unes des autres, qui, lorsque chacune d'elles passe par une cellule photoélectrique (21) l'excitent, et cette dernière commande alors la descente de l'organe poinçonneur presseur et façonneur (28,29) d'hamburgers; il existe un écarteur à la manière d'une tige (40) qui écarte l'extrémité de viande hachée (7c) contiguë à celle qui vient d'être façonnée en hamburger et qui monte éventuellement; avant ledit organe poinçonneur il y a un dispositif antiobstruction (41,42,43,44); les découpures de film restantes sont poussées par une conduite d'air et à travers une ouverture (34) de la plate-forme (5) vers un réservoir (37) qui, de préférence, est un sac de maille; la portion (5e) de plate-forme située sous l'organe poinçonneur (28) est striée pour éviter que les hamburgers façonnées se collent; la partie inférieure de la même plate-forme est reliée à une bande transporteuse (33) sans fin qui emporte lesdits hamburgers.

2. Machine selon la revendication 1, caractérisée en ce que les moyens pour couper à intervalles l'alimentation de viande hachée consistent en une vanne (17) qui, avec l'organe poinçonneur (28), descend en produisant la coupe correspondante.

3. Machine selon les revendications précédentes, caractérisée en ce que les moyens pour régler l'entrée de viande hachée consistent en une planche inclinée (14) associée à une glissière (15) dans laquelle engrène un pignon (16) correspondant qui pivote dans un sens ou autre, afin de faire descendre ou monter cette planche (14), en réduisant ou en élargissant le passage de la propre conduite d'entrée.

4. Machine selon les revendications précédentes, caractérisée en ce que ladite conduite d'entrée a des guides latéraux (13) en glissière qui agissent comme frein réglable de masse pour pouvoir travailler avec n'importe quelle sorte de viande.

5. Machine selon les revendications précédentes, caractérisée en ce que les éléments détectant la fin de la bande de chaque bobine consistent en ce que la propre bobine porte un noyau métallique (23), en même temps que sur la bande flexible correspondante est appuyée une borne (24,25) qui, lorsque cette bande est finie, établi le contact avec ledit noyau en produisant l'arrêt de la machine.

6. Machine selon les revendications précédentes, caractérisée en ce que le dispositif antiobstruction consiste en une tige (41) ayant un prolongement inférieur en face du passage de la viande hachée (7c), avec les bandes (18,19) supérieure et inférieure, à un point avant l'organe poinçonneur (28); l'extrémité supérieure de ladite tige est tangente au bouton (42) d'un microrupteur (43), de sorte que lorsqu'une obstruction a lieu, elle monte en acttionnant ledit microrupteur qui fait arrêter la machine.

7. Machine selon les revendications précédentes, caractérisée en ce que, optionellement, l'organe poinçonneur (28), qui est rechangeable, dispose d'une partie droite, dentelée (45) pour couper le papier et adossée à une autre partie au contour convenable pour le pressage de l'hamburger et sans précoupe de la prochaine portion des bandes flexibles (18,19), ledit organe poinçonneur agissant sur une ouverture rectangulaire (46).

8. Machine selon les revendications précédentes, caractérisée en ce que, lorsque la machine d'hamburgers est branchée à une machine à bourrer (8) en continu, il est prévu un système à dispositif automatique conventionel pour être alimenté en portions de viande hachée, consistant à faire fonctionner ladite machine à bourrer à des intervalles marqués par ledit système à dispositif automatique conventionnel.

## Claims

1. Machine for making hamburgers, of the type embodying a bench with an inclined platform (5) on whose top there is means to supply the chopped meat coming by pressure from a stuffing machine, tank or supplying element (8) thereof, an inlet duct for the chopped meat provided with means to set the passage thereof, then means such as coils (9,10) which supply strips (18, 19) of flexible sheet to, respectively, cover the top and bottom of the piece of chopped meat (7) which is moving from the said supplying means, and then a shaping means (11) to provide the meat an hamburger shape, such as a stamping die (28, 29), driven by a mechanical or pneumatic element (12), characterized in that the said bench consists in a kind of cabinet (1) containing the electrical circuit and the driving and operating means of the very machine; the chopped meat inlet duct is provided with means to stop feeding from time to time; the flexible strip coils (9,10) are provided with respective inertia brakes, as well as respective elements which detect when the strip is ending; at those coils outlet there is a rammer (38) with spring (39), for the strips (18, 19) of flexible sheet and the chopped meat (7); at least one of the strips (18, 19) of flexible sheet contains marks (20), at a certain gap from each other, which, when passing each near a photoelectric cell (21) activates it, this latter driving then the hamburger die-pressing, stamping and shaping device (28,29) down; there exists a separator similar to a stem (40) which separates the end of the chopped meat (7c) adjacent to the one which has just been shaped to an hamburger and which, eventually rises; before the said die-pressing element there is an antijamming device (41, 42, 43, 44); the sheet cuttings in excess are propelled by an air duct and through an opening (34) of the platform (5) toward a tank (37) which, preferably, is a mesh bag; the portion (5e) of the platform located under the die-pressing element (28) is grooved to prevent that the shaped hamburgers stick; the bottom of the said platform is linked to an endless conveyor belt (33) which carries the said hamburgers.

2. Machine according to claim 1, characterized in that the means to stop from time to time the chopped meat supply consists in a gate (17) which, together with the die-pressing element (28), goes down producing related cut.

3. Machine according to above claims, characterized in that the means to set the chopped meat inlet consists in an inclined plate (14) associated to a toothed rack in which related pinion is geared, rotatory in any direction, in order to have the said plate (14) lowering or rising, reducing or enlarging the passageway of the own inlet duct.

4. Machine according to above claims, characterized in that the said inlet duct includes sliding side guides (13) which operates as meat piece setting brake in order to work with any kind of meat.

5. Machine according to above claims, characterized in that the elements which detects the strip end of each coil consists in that the very coil has a metallic core (23), and at same time related flexible strip supports an electrical terminal (24,25) which, when the said strip ends, contacts the said core the machine stopping therefore.

6. Machine according to above claims, characterized in that the antijamming device consists in a stem (41) with a lower extension facing the chopped meat passageway (7c), and the upper and the lower strips (18, 19), at a point before the die-pressing element (28); the upper end of the said stem is tangent to the push-button (42) of a microswitch (43), in such a way that when a jam occurs the former rises activating such microswitch which stops the machine.

7. Machine according to above claims, characterized in that, optionally, the die-pressing element (28), which is renewable, has available a straight , toothed portion (45) to cut the paper and backing another portion having a convenient outline for pressing the hamburger and without pre-cut at the next portion of flexible strips (18, 19), the said element operating on a rectangular opening (46).

8. Machine according to above claims, characterized in that, when the machine for making hamburgers is connected to a continuous stuffing machine (8), a system having a conventional automatic device is foreseen to feed pieces of chopped meat, consisting in making the said stuffing machine operates at intervals marked by the said conventional automatic system.

## Patentansprüche

1. Maschine zum Herstellen von Hamburgern, welche aus einem Maschinenbett mit einer Schrägplatte (5), an deren Oberseite Zuführungsmittel angeordnet sind, welche, unter Druck, Hackfleisch von einer Wurststopfmaschine, Magazin oder Zuführungsorgan (8) dergleichen beziehen, ebenso aus einer Zufuhrleitung für Hackfleisch, welche mit Mitteln zur Einstellung der Durchflussmenge des Hackfleisches ausgestattet ist, ferner aus Mittel, wie z.B. Rollen (9, 10), welche, jeweils, ein flexibles Folienband (18, 19) liefern, um das von den Zuführungsmittel kommende Hackfleisch (7), jeweils, an der Unter- und Oberseite abzudecken und ebenso aus einem Formwerkzeug (11), wie z.B. eine Pressform (28, 29), angetrieben durch ein mechanisches oder hydraulisches Organ (12), zur Umwandlung des Hackfleisches in Hamburger, besteht, dadurch gekennzeichnet, daß das genannte Maschinenbett aus einer Art Schrank (1) besteht, welcher den elektrischen Stromkreis, sowie die Maschinensteuerung- und Betriebelemente behinhaltet; daß die Zufuhrleitung des Hackfleisches mit Mittel versehen ist, um die Zuführung zeitweise zu sperren; daß die Rollen (9, 10) der flexiblen Folie, jeweils, mit Trägheitsbremsen, sowie mit den entsprechenden Elementen ausgestattet sind, die den Verbrauch der Folie feststellen; daß am Rollenaustritt ein Andruckfuß (38) mit Feder (39) der flexiblen Folien (18, 19) und des Hackfleisches (7) angeordnet ist; daß zumindest eine der flexiblen Folien (18,19) mit Marken (20), in einem gewissen Abstand zueinander, versehen ist, welche, bei deren einzelnen Durchlauf, eine Photozelle (21) anregen, die anschließend den Niedergang des Stanz-, Press und Formwerkzeugs (28, 29) der Hamburger bewirkt; daß ein Zapfen (40) als Abstreifer vorhanden ist, welcher das Ende des Hackfleisches (7c) von dem zu Hamburger umgeformten Ende trennt und welcher, gegebenenfalls, gehoben wird; daß sich vor dem erwähnten Werkzeug eine Vorrichtung (41, 42, 43, 44) befindet, welche eine Verstopfung verhindern soll; daß die überschüssigen Folienstreifen mittels eines Luftkanals durch eine Öffnung (34) der Schrägplatte (5) in einen Behälter (37) abgeführt werden, der, vorzugsweise, aus einem Netzbeutel besteht; daß der Abschnitt (5e) der Schrägplatte, der sich unter dem Formwerkzeug (28) befindet, Rillen aufweist, um ein Anhaften der geformten Hamburger zu vermeiden; daß das Unterteil der gleichen Schrägplatte an ein Endlosförderband (33) anschliesst, welches die erwähnten Hamburger abführt.

2. Maschine nach Anschpruch 1, dadurch gekennzeichnet, daß die Mittel zur zeitweiligen Sperrung der Hackfleischzufuhr aus einer Klappe (17) bestehen, welche, zusammen mit dem Formwerkzeug (28), herabgelassen wird und die entsprechende Sperrung bewirkt.

3. Maschine nach den vorstehenden Ansprüchen, dadurch gekennzeichnet, daß die Mittel zur Einstellung der Hackfleischzufuhr aus einer schrägen Platte (14) in Zusammenhang mit einer Zahnstange (15) bestehen, in welcher ein Ritzel (16) eingreift, das beidseitig drehbar ist, sodaß die erwähnte Platte (14) gehcben oder herabgelassen werden kann, wodurch der Durchfluß der Zufuhrleitung verringert oder vergrößert werden kann.

4. Maschine nach den vorstehenden Ansprüchen, dadurch gekennzeichnet, daß die erwähnte Zufuhrleitung seitliche Schieberführungen (13) aufweist, welche als einstellbare Bremse der Fleischmasse arbeiten, um so mit jeglicher Fleischart arbeiten zu konnen.

5. Maschine nach den vorstehenden Ansprüchen, dadurch gekennzeichnet, daß die Elemente, die das Folienende in jeder Rolle feststellen darin bestehen, daß die Rolle selbst einen metallischen Kern (23) aufweist und gleichzeitig an der entsprechenden flexiblen Folie ein Kabelendstück (24,25) aufliegt, welches, nach Verbrauch der Folie, mit dem erwähnten Kern in Kontakt kommt und die Maschine anhält.

6. Maschine nach den vorstehenden Ansprüchen, dadurch gekennzeichnet, daß die Vorrichtung zur Verhinderung von Verstopfungen aus einem Zapfen (41) besteht, der eine untere Aufweitung aufweist, welche dem Durchfluß des Hackfleisches (7c) mit den Folien (18, 19) entgegengesetzt ist und an einer Stelle, die vor dem Formwerkzeug (28) liegt, angeordnet ist; das Oberende dieses Zapfens liegt tangential zu einem Taster (42) eines Mikroschalters (43), sodaß bei einer Verstopfung ersterer gehoben wird und den erwähnten Mikroschalter betätigt, was die Maschine zum Stillstand bringt.

7. Maschine nach den vorstehenden Ansprüchen, daducrh gekennzeichnet, daß, wahlweise, das Formwerkzeug (28) , welches austauschbar ist, eine verzahnte, gerade Fläche (45) aufweist, um Papier zu schneiden, angeordnet an einer anderen Stelle der zur Formung des Hamburgers geeigneten Kontur und ohne Vorschnitt der darauffolgenden flexiblen Folien (18, 19), wobei diese Stanzfläche durch eine rechteckige Öffnung (46) arbeitet.

8. Maschine nach den vorstehenden Ansprüchen, dadurch gekennzeichnet, daß, wenn die Maschine zur Herstellung von Hamburgern an eine kontinuierlich arbeitende Wursstopfmaschine (8) gekoppelt ist, eine herkömmliche selbstätige Vorrichtung vorgesehen ist, um Portionen von Hackfleisch zuzuführen und welche darin besteht, daß diese Wurststopfmaschine in von dieser herkömmlichen Vorrichtung vorgelegten Zeitabständen arbeitet.
